# EUROPEAN PATENT SPECIFICATION

(11) **EP 3 158 243 B1**
(45) Date of publication and mention of the grant of the patent: **30.01.2019**
(21) Application number: 15733492.1
(22) Date of filing: 19.06.2015
(51) Int. Cl.: F16K 43/00, F16K 17/04, F16K 17/168

(54) **IMPROVEMENTS TO SAFETY VALVE CONNECTIONS**
VERBESSERUNGEN AN SICHERHEITSVENTILVERBINDUNGEN
PERFECTIONNEMENTS APPORTÉS À DES RACCORDS DE SOUPAPE DE SÉCURITÉ

(30) Priority: 20.06.2014 GB 201411048
(43) Date of publication of application: 26.04.2017
(73) Proprietor: Seetru Limited, Bristol BS1 6UT (GB)
(72) Inventor: CIPRIANI, Peter, Stroud Gloucestershire GL5 4DG (GB); READ, Sarah, Brough Yorkshire HU15 2RY (GB); MOSS, Richard, Warmely Bristol BS30 8DL (GB)
(74) Representative: Barker Brettell LLP
(86) International application number: PCT/GB2015/051792
(87) International publication number: WO 2015/193679

(56) References cited:
- EP-A1- 1 225 381
- EP-B1- 0 066 023
- NL-C2- 1 011 161

## Description

The present invention relates to an apparatus for exchanging safety valves in a system, and in particular to a valve arrangement for isolating one from a pair of safety valves installed in parallel.

In piping systems it is often necessary to provide a safety valve which prevents the pressure in the system exceeding a maximum value. In safety critical systems it can be necessary to provide backup safety valves to meet safety standards. It is important to ensure that the safety valves are regularly maintained and in some systems this maintenance must be preformed while the system is at operating pressure. It is also important that the safety of the system is not compromised during any maintenance work. An apparatus that enables safety valves to be removed from a system without compromising safety is therefore desirable.

EP1225381 A1 relates to a safety apparatus for pressurised systems according to the preamble of claim 1 which includes a manifold having at least two outlets and a flow director valve disposed between the outlets to direct fluid pressure from an inlet to one or the other of the outlets. Safety valve mechanisms are mounted at each manifold outlet.

The invention provides a safety apparatus for a pressurised system, the apparatus comprising: first and second safety valves; a system port for connection to the pressurised system; and a connecting means comprising a three way valve. The three way valve comprises a valve member which is arranged to rotate about an axis defined between two ends of the valve member and a channel is formed in a portion of the valve member in the region in between the two ends of the valve member. The channel forms an opening on the surface of the valve member and the opening extends around at least one half of the circumference of the valve member. The first and second safety valves are connected to the system port through the connecting means, and the connecting means may be arranged to individually isolate either the first or second safety valve from the system port without isolating the other safety valve from the system port thereby preventing both safety valves being isolated from the system port at the same time. The connecting means may be arranged to provide full bore connection simultaneously to the first and second safety valves and the system port. The connecting means may be arranged to individually isolate either the first or second safety valve from the system while maintaining full bore connection between the system port and the other safety valve.

The connecting means comprises a three way valve. The three way valve comprises a valve member which is arranged to rotate about an axis defined between two ends of the valve member. The axis may extend between two opposite ends, which may be a top and bottom, of the valve member. A channel is formed in a portion of the valve member in the region in between the two ends of the valve member. The channel forms an opening on the surface of the valve member. The opening may extend from a first point in a first direction around the axis and part way around the surface of the valve member to a second point, leaving a closing region which may extend from the first point in a second direction, opposite to the first, around the axis and part way around the surface of the valve member to the second point. The opening may only partially encompass the valve member.

The opening may be defined by three circular areas on the surface of the valve member, the three circular areas being connected to each other by bores meeting within the valve member and being of substantially equal diameter, and wherein the opening is also defined by a passage with a width which is less than the diameter of the circular areas which extends around the surface of the valve member joining the three circular areas.

The valve member may be surrounded by a body which may define two outlet ports each arranged to be connected to a respective one of the safety valves. The channel opening may be arranged to join the system port with both outlet ports simultaneously. The closing region may be arranged to close off each of the outlet ports when rotated so as to be aligned therewith.

The opening extends around at least one half of the circumference of the valve member. The channel may extend through the axis of rotation of the valve member in a direction substantially perpendicular to the axis. The valve member may comprise two lobes, one on each side of the channel. The valve member may comprise a ball having a part-spherical surface.

The valve member may be connected to a spindle which may be arranged to rotate the valve member, the spindle may define a key which engages the valve member, wherein the key only allows the spindle to be connected to the valve member in one orientation. The valve member may be a ball with a keyway formed in the surface of the ball and wherein the key may be formed on the spindle in a position offset from the central axis of the spindle.

The connecting means may comprise an actuating means such as a handle, or handwheel, which allows manual or automatic isolation of either the first or second safety valve.

The apparatus may further comprise, in any combination, any one or more of the features of the preferred embodiments of the invention, which will now be described, by way of example only, with reference to the accompanying drawings in which:
**Figure 1** shows a section view of a pressure safety apparatus according to an embodiment of the present invention;
**Figure 2** shows a detailed view of the three way valve from the pressure safety apparatus shown in Figure 1;
**Figure 3** shows the ball from the three way valve shown in Figure 2;
**Figure 4** shows the apparatus from Figure 1 with both safety valves connected to the system port;
**Figure 5** shows the apparatus from Figure 1 with the first safety valve isolated from the system port;
**Figure 6** shows the apparatus from Figure 1 with the second safety valve isolated from the system port;
**Figure 7** shows an exploded view of the valve member and body shown in Figure 1;
**Figure 8** shows an alternative valve member which may be used in the apparatus of Figures 1 to 7;
**Figure 9** shows a projection view of a pressure safety apparatus according to an embodiment of the invention;
**Figure 10** shows a section view of the pressure safety apparatus shown in Figure 9;
**Figure 11** shows a projection view of a pressure safety apparatus according to another embodiment of the invention;
**Figure 12** shows a section view through the pressure safety apparatus shown in Figure 11;
**Figure 13** shows a further section view of the pressure safety apparatus shown in Figures 11 and 12; and
**Figure 14** shows a section view through the spindle of a pressure safety apparatus according to another embodiment of the invention.

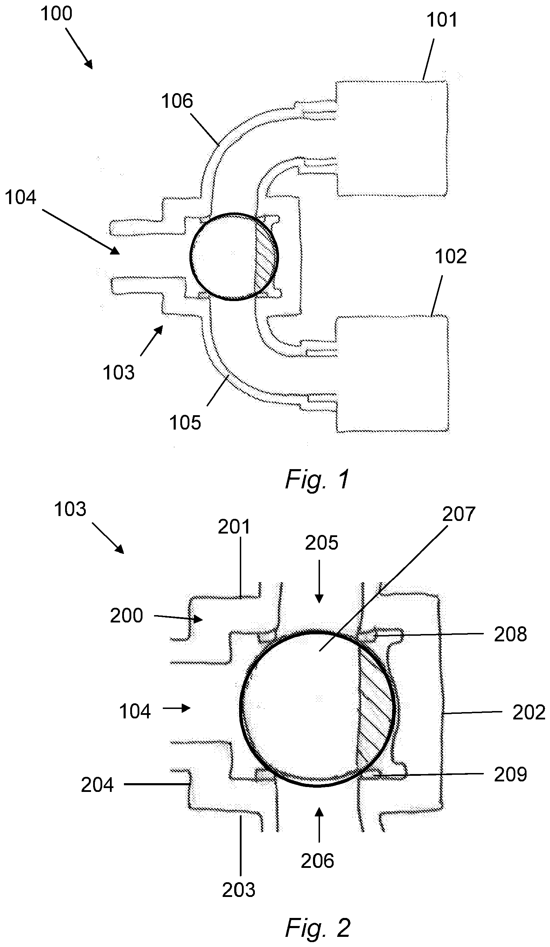

Referring to Figures 1 and 2, a pressure safety apparatus 100 is shown which comprises two individual safety valves 101 and 102 and a connecting means in the form of a three way valve 103. The three way valve (shown in more detail in Figure 2) has a rectangular body 200 with four side surfaces 201, 202, 203, 204 and a top and a bottom surface. The body defines three ports 205, 206, 104 in three of the side surfaces 201, 203, 204. Two of these ports 205, 206 are outlet ports and one is an inlet port 104. The first outlet port 205 is connected to the first safety valve 101, the second outlet port 206 is connected to the second safety valve 102, and the inlet port 104 is connected to the system to be governed by the safety valves 101, 102. The inlet port 104 is open to the system pressure. The safety valves 101, 102 are each supported on a rigid pipe 105, 106 with a 90 degree bend. The valve body 200 and the pipes 105, 106 may be formed from stainless steel and the pipes may be welded to the body 200. The pipes form the connections between the outlet ports 205, 206 on the three way valve and the safety valves 101, 102. The first 205 and second 206 outlet ports of the three way valve are positioned in line on opposing sides of the valve. The outlet ports are circular and define circular openings in the sides 201, 203 of the valve body 200. The system port 104 is positioned perpendicular to the first and second ports on a third side of the valve. The valve has a fourth side 202 which is blank with no port.

The ports 104, 205, and 206 meet at a central cavity in the valve where a valve member in the form of a ball 207 is held between two identical mutually facing PTFE seats 208, 209 each fitted around the outlet ports 205, 206. Instead of PTFE seats, an alternative is to provide a pair of PTFE O-rings each in a machined groove located in the internal cavity, where a groove surrounds each of the outlet ports. Of course materials other than PTFE may be used. The ball 207 is mounted in the body 200 for rotation about a first axis as will be described in more detail below. The first seal 208 is positioned between the first outlet port 205 in the three way valve and the ball 207, and the second 209 is positioned between the second outlet port 206 in the three way valve and the ball 207. The seals are ring shaped and are positioned over the outlet ports 205, 206 and are parallel to each other and co-axial. Each seal has a central opening which is centred on the outlet port.

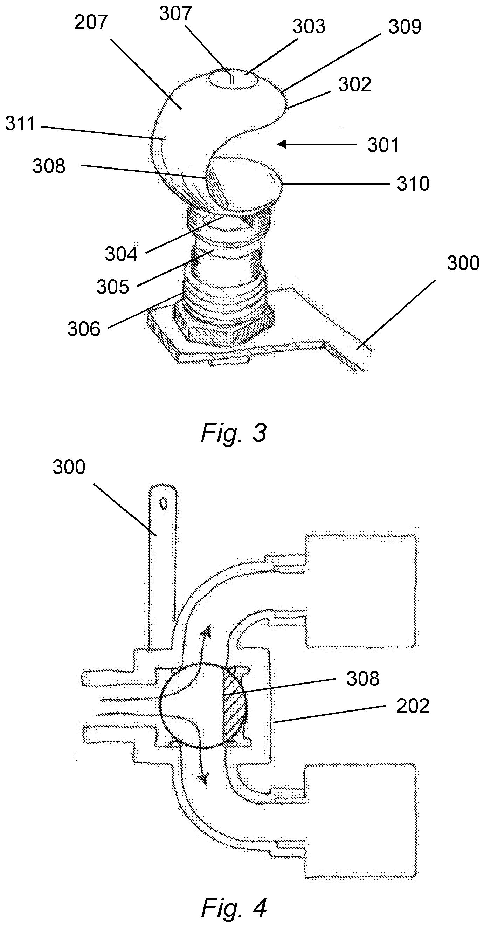

Referring to Figure 3, a channel 301 is defined through the ball 207 and extends from the centre of one hemisphere, through the centre of the ball, in a direction perpendicular to the axis of rotation, to the centre of the opposite hemisphere. The channel 301 has a bottom 308 which runs straight through the ball 207 and the top of the channel 301 is open. The bottom of the channel is semicircular in cross section, centred on an axis through the centre of the ball, and above that the sides of the channel are flat, so that the channel is generally U-shaped in cross section. The radius of curvature of the bottom of the channel is less than the radius of the ring seals 208, 209, so that when the channel is aligned with the two outlet ports, the ring seals 208, 209 seal against the part-spherical surface around the bottom of the channel. The top of the channel forms an opening 302 on the surface of the ball which is a round oblong shape that extends from the centre of one hemisphere around the surface of the ball along the central circumference to the opposite hemisphere. The opening 302 forms a region which is large enough to face and encompass at least part of both outlet ports, and the inlet port, of the three way valve, when the ball 207 is in a first position (as shown in Figure 4). The regions of the ball 207 either side of the channel form a pair of lobes 309, 310, such that the ball 207 has a U shaped profile when viewing the ball along the length of the channel 301. The region of the ball 207 below the bottom of the channel 301 joins the lobes 309, 310, and its outer surface forms part of the part-spherical surface of the ball which provides a closing region 311. The closing region 311 is larger than the opening in each of the seals 208, 209 and is therefore large enough to completely close off either of the outlet ports 205, 206 if rotated to cover the opening in one of the seals. The ball 207 therefore has a part-spherical surface, or dome, which includes the closing region 311 and the regions between the opening 302 of the channel 301 and the flat surfaces at the ends 303, 304 of the ball.

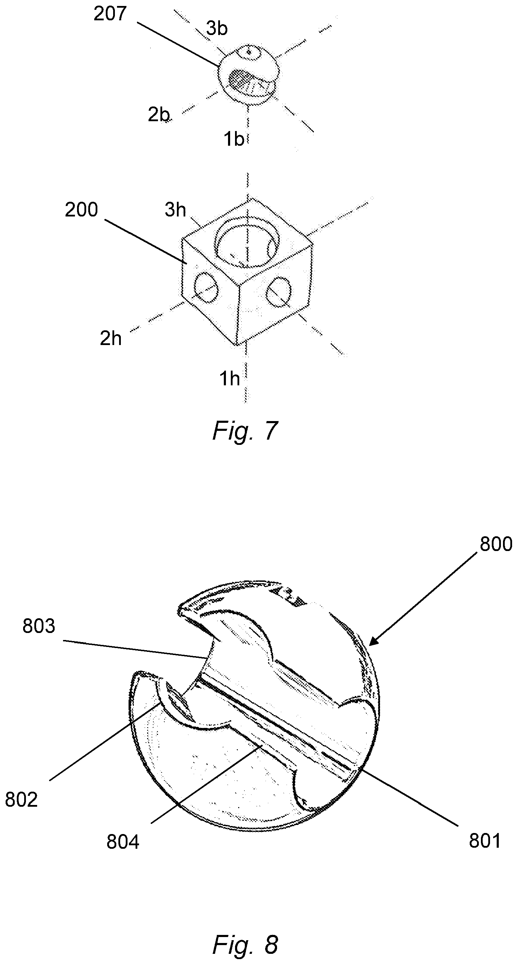

As shown in Figure 7, the ball 207 may be considered to contain three mutually perpendicular axes 1b, 2b and 3b meeting at the centre of the ball 207. The first axis 1b, which is the axis of rotation, may be considered as extending perpendicularly through both lobes 309, 310 of the ball 207. The second axis 2b may be considered as extending parallel to the length of the channel 301, at the centre of curvature of the bottom of the channel. The third axis 3b may be considered as extending from the top of the channel 301 through the centre of the opening in the surface of the ball perpendicularly towards and through the base of the channel and out through the dome of the ball. The body 200 may also be considered to have three mutually perpendicular axis 1h, 2h and 3h meeting at the centre of the body. The first axis 1h is aligned with the rotational axis of the ball 1b. The second axis 2h passes through the centre of both outlet ports of the body. The third axis 3h passes through the centre of the inlet port.

Referring back to Figure 3, the ball 207 is connected to a handle 300 and can rotate within the valve body 200 around the first axis. The ball 207 may be rotated so that the channel 301 extends between the first and second outlet ports of the valve. The channel 301 therefore extends across the ball, along the second axis, in a direction perpendicular to the axis of rotation of the ball. There are two flat surfaces machined on the ball's surface on two ends 303, 304 of the ball where the first axis (the axis of rotation of the ball) passes through the lobes 309, 310. One end of a spindle 305 is connected to one end 304 of the ball, this connection may be via a Woodruff keyway cut into the ball and a complementing Woodruff key may be formed on the end of the spindle. The other end of the spindle 305 is connected to the handle 300. A threaded sealing plug 306 is positioned on the spindle 305 which screws into the valve body 200 and seals the gap between the valve body and the spindle while still allowing the spindle to rotate. The other end 303 of the ball may have a small hole 307 drilled through to the channel 301 providing a drainage passage back to the channel.

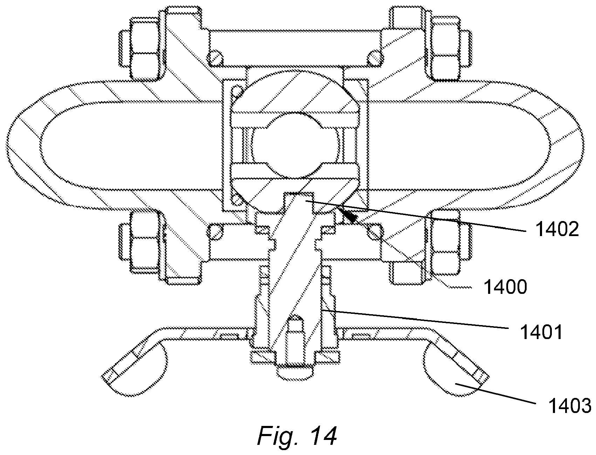

Referring to Figure 14, the ball 1400 is connected to the spindle 1400 with a woodruff key 1402 which is formed on the spindle and offset from the central axis of the spindle 1401. A corresponding offset keyway is formed in the ball 1400 such that the spindle can only be connected to the ball in one orientation. A handle 1403 is connected to the spindle 1401 at the opposite end to the ball 1440. The offset woodruff keyway prevents the spindle being fitted in different orientations which may mislead the operator to the current valve position.

The apparatus can be joined to a piping system by welding the system port 104 to a tee piece fitted in the piping system. The safety valves are removably connected to the rigid pipes 105, 106 which connect the valves to the outlet ports of the three way valve.

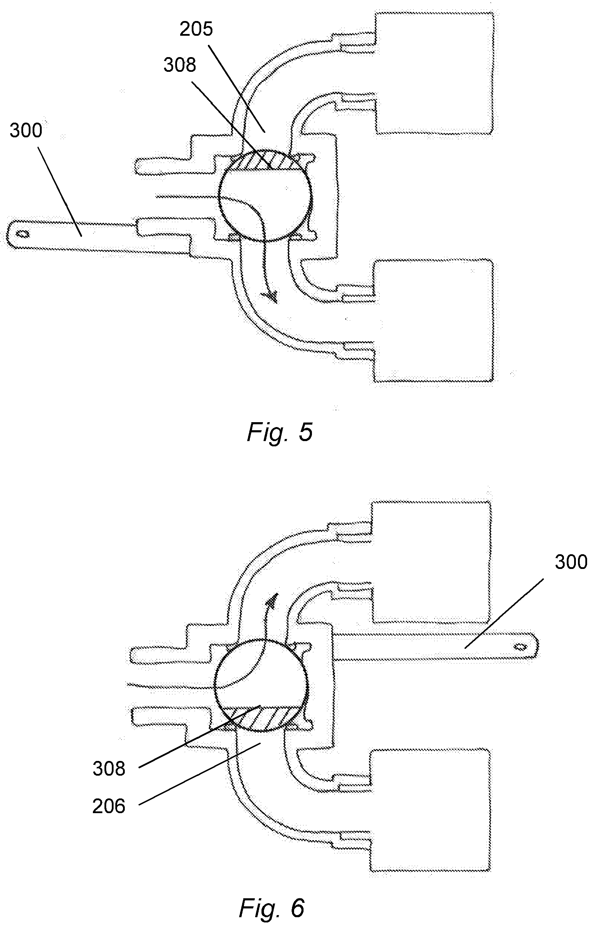

In normal operation the handle 300 can be left in a neutral position such that the base 308 of the channel in the ball is parallel with the first and second ports to the safety valves as shown in Figure 4. In this arrangement both safety valves are connected to the system. During maintenance of the safety valves the handle can be moved through 90 degrees clockwise or anticlockwise, moving the closing region of the dome of the ball over the opening in one of the PTFE seats 208, 209 to isolate one or other of the safety valves from the system while leaving the remaining safety valve connected to the system, as shown in Figures 5 and 6. A similar effect can be achieved with the use of PTFE O-ring seals instead of the seats. O-rings have the advantage over integral sealing seats that if the seal is damaged an O-ring can be easily replaced. O-rings also contribute a self-sealing action to the sealing of the ball surface.

It will be appreciated that as one of the valves is isolated by rotating the ball so that the base 308 of the channel blocks the outlet port in the three way valve, the path between the system port and the opposing safety valve port remains open and unobstructed, and therefore the function of the other safety valve is not compromised by isolating the safety valve. With the safety valve isolated from the system it may be removed for maintenance and refitted. The safety valve can then be reconnected to the system by moving the handle back to the neutral position and the procedure may be repeated for the second safety valve.

The handle 300 has three positions, in the first the base 308 of the channel is positioned in line with the fourth side 202 of the valve so there is a clear path from the inlet port through the valve to both safety valves. In the second position the base 308 of the channel is positioned over the first port 205 blocking the port and isolating the first safety valve. In the third position the base 308 of the channel is moved over the second port 206 blocking the port and isolating the second safety valve. It will be appreciated that by having a single valve 103 for individually isolating both safety valves it is not possible to accidently isolate both safety valves at once and compromise the safety of the system.

An alternative valve member in the form of a ball 800 forming part of a further embodiment is shown in Figure 8. The ball has three circular areas 801, 802, and 803 in its surface which are open to form holes, connected by bores which meet at the centre of the ball. Two of the circular areas 801 and 803 are defined by the ends of a first bore which passes straight through the centre of the ball. The third circular area 802 is defined by the end of a single bore which passes in a direction perpendicular to the first bore and meets the first bore at the centre of the ball in a tee arrangement. A passage or slot 804 is cut between the holes 801, 802, and 803 which is narrower than the diameter of the holes. The slot 804 is centred on the plane containing the axes of the two bores, and extends from the side of the first bore out to the surface of the ball in the same direction as the second bore. The holes and the passage together form a single opening on the surface of the ball including the circular areas and the two narrower areas between them.. Providing a narrow passage which links the holes in the surface of the ball has been found to improve the sealing between the ball and the seals in the valve body.

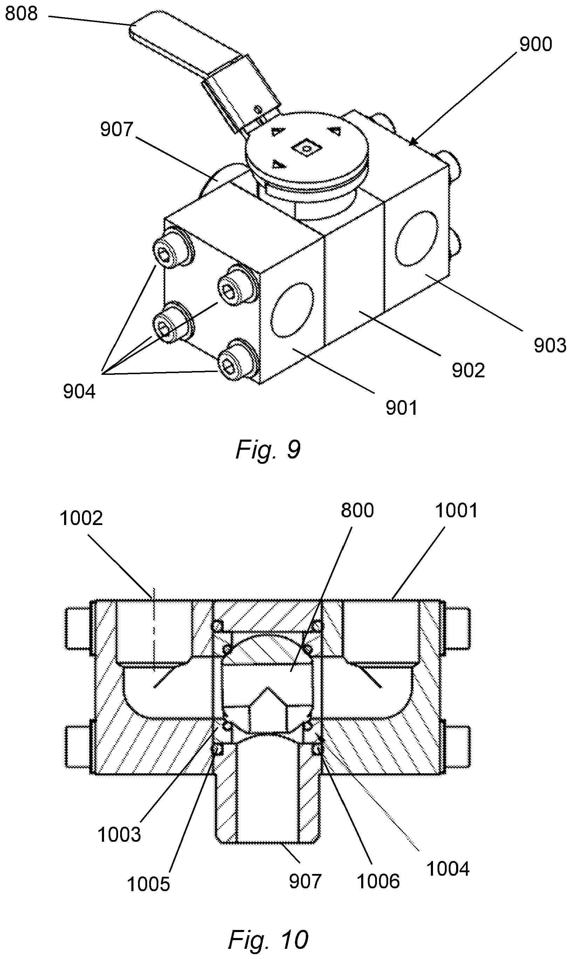

A further embodiment of the invention is shown in Figures 9 and 10. This arrangement is the same as the previous embodiment except the valve and outlet ports are contained within a body 900 of material comprising three rectangular blocks 901, 902 and 903. The three rectangular blocks are joined together by four bolts 904 which pass directly through the four corners of all three blocks. The middle block 902 defines the system inlet port and contains the valve member800. Blocks 901 and 903 contain first 1001 and second 1002 outlet port extensions respectively. Seal holders 1003 and 1004 are positioned within the outlet ports of the middle block. The seal holders 1003 and 1004 support PTFE seals which seal against the surface of the valve member 800. The arrangement of the valve member and seals are as described in previous embodiments.

The end blocks 901 and 903 contain outlet port extensions 1001 and 1002 which are arranged to divert the flow from the valve member 800 to the safety valves. The extensions 1001 and 1002 each bend through 90 degrees.

The end blocks 901 and 903 seal against the middle block 902 by means of face sealing O-rings 1005 and 1006 of PTFE each positioned in a groove formed between the body of the middle block and the seal holders 1003 and 1004.

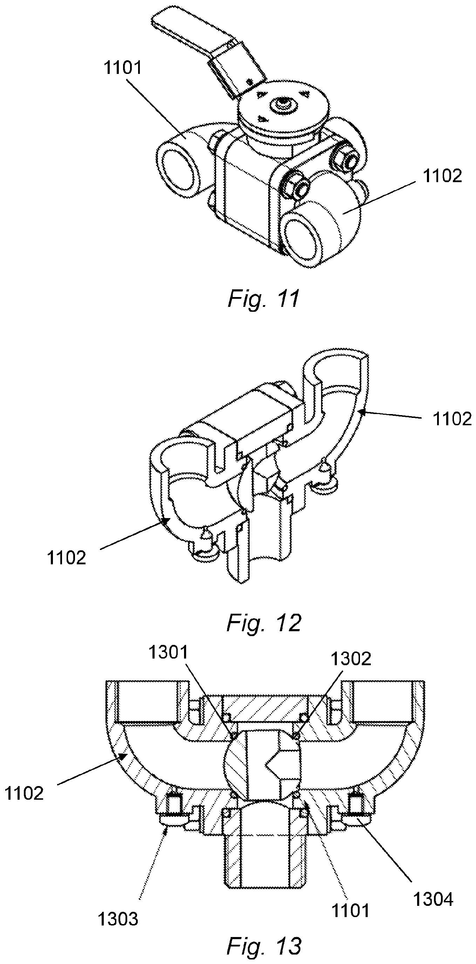

A further embodiment is shown in Figures 11 to 13 in which the end blocks have been replaced with pipe fittings 1101 and 1102. The pipe fittings 1101 and 1102 also provide seal holders which accommodate the O-rings or seats 1301 and 1302 which seal against the surface of the ball.

Further bleed screws 1303 and 1304 are each position in one of the pipe fittings 1101 and 1102. The bleed screws allow pressure to be released from the pipe fittings once a fitting has been isolated from the system pressure with the valve member.

It will be appreciated that other embodiments of the invention may vary from the embodiments described above. For example, the two outlet ports may be positioned at any angle around the axis of rotation of the valve member. The valve member may have other forms, for example the valve member may be cylindrical in shape rather spherical. Also the shape of the channel through the valve member can vary considerably, provided the channel is large enough to open into all three ports simultaneously, and the closing region of the ball is large enough to close off each of the outlet ports, one at a time, the valve will function as required.

## Claims

1. A safety apparatus (100) for a pressurised system, the apparatus (100) comprising: first and second safety valves (101, 102); a system port (104) for connection to the pressurised system; and a connecting means comprising a three way valve (103), wherein the three way valve (103) comprises a valve member (207) which is arranged to rotate about an axis (1b) defined between two ends (303, 304) of the valve member (207) and wherein a channel (301) is formed in a portion of the valve member (207) in the region in between the two ends (303, 304) of the valve member (207), wherein the channel (301) forms an opening (302) on the surface of the valve member (207), wherein the first and second safety valves (101, 102) are connected to the system port (104) through the connecting means, which can be arranged to individually isolate either the first or second safety valve (101, 102) from the system port (104) without isolating the other safety valve (101, 102) from the system port (104) thereby preventing both safety valves (101, 102) being isolated from the system port (104) at the same time, **characterised in that** the opening (302) extends around at least one half of the circumference of the valve member (207), and **in that** the connecting means can be arranged to provide full bore connection simultaneously to the first and second safety valves (101, 102) and the system port (104).

2. The apparatus (100) of claim 1 wherein the opening (302) extends from a first point in a first direction around the axis (1b) and part way around the surface of the valve member (207) to a second point, leaving a closing region (311) extending from the first point in a second direction, opposite to the first direction, around the axis (1b) and part way around the surface of the valve member (207) to the second point.

3. The apparatus (100) of 2 wherein the opening (302) is defined by three circular areas (801, 802, 803) on the surface of the valve member (207), the three circular areas (801, 802, 803) being connected by bores meeting within the valve member and being of substantially equal diameter, and wherein the opening (302) is also defined by a passage (804) with a width which is less than the diameter of the circular areas (801, 802, 803) which extends around the surface of the valve member (207) joining the three circular areas (801, 802, 803).

4. The apparatus (100) according to claims 2 and 3 wherein the valve member (207) is surrounded by a body (200) which defines two outlet ports (205, 206) each arranged to be connected to a respective one of the safety valves (101, 102).

5. The apparatus (100) of claim 4 wherein the channel opening (302) can be arranged to join the system port (104) with both outlet ports (205, 206) simultaneously.

6. The apparatus (100) of claims 2 to 5 wherein the closing region (311) is arranged to close off each of the outlet ports (205, 206) when rotated so as to be aligned therewith.

7. The apparatus (100) of any one of claims 1 to 6 wherein the channel (301) extends through the axis of rotation (1b) of the valve member (207) in a direction substantially perpendicular to the axis (1b).

8. The apparatus (100) of any one of claims 1 to 7 wherein the valve member (207) comprises two lobes (309, 310) one on either side of the channel (301).

9. The apparatus (100) of any one of claims 1 to 8 wherein the valve member (207) comprises a ball having a part-spherical surface.

10. The apparatus (100) of any one of claims 1 to 9 wherein the valve member (207) is connected to a spindle (305) which is arranged to rotate the valve member (207), the spindle (305) defining a key which engages the valve member (207), and wherein the key only allows the spindle (305) to be connected to the valve member (207) in one orientation.

11. The apparatus (100) of claim 10 wherein the valve member (207) is a ball with a keyway formed in the surface of the ball and wherein the key is formed on the spindle (305) in a position offset from the central axis of the spindle (305).

12. The apparatus (100) of any preceding claim wherein the connecting means comprises a handle (300) which allows manual isolation of either the first or second safety valve (101, 102).

## Patentansprüche

1. Sicherheitsvorrichtung (100) für ein unter Druck stehendes System, wobei die Vorrichtung (100) umfasst: erste und zweite Sicherheitsventile (101, 102); einen Systemanschluss (104) für eine Verbindung zu dem unter Druck stehenden System; und ein Verbindungsmittel umfassend ein Dreiwegeventil (103), wobei das Dreiwegeventil (103) ein Ventilelement (207) umfasst, das angeordnet ist, um eine Achse (1b) zu rotieren, die zwischen zwei Enden (303, 304) des Ventilelements (207) definiert ist, und wobei ein Kanal (301) in einem Teil des Ventilelements (207) in der Region zwischen den beiden Enden (303, 304) des Ventilelements (207) ausgebildet ist, wobei der Kanal (301) eine Öffnung (302) an der Oberfläche des Ventilelements (207) ausbildet, wobei die ersten und zweiten Sicherheitsventile (101, 102) mit dem Systemanschluss (104) durch das Verbindungsmittel verbunden sind, das angeordnet werden kann, um entweder das erste oder das zweite Sicherheitsventil (101, 102) von dem Systemanschluss (104) einzeln zu isolieren, ohne das andere Sicherheitsventil (101, 102) von dem Systemanschluss (104) zu isolieren, wodurch verhindert wird, dass beide Sicherheitsventile (101, 102) gleichzeitig von dem Systemanschluss (104) isoliert sind, **dadurch gekennzeichnet, dass** sich die Öffnung (302) um mindestens eine Hälfte des Umfangs des Ventilelements (207) erstreckt, und dass das Verbindungsmittel angeordnet werden kann, um eine Verbindung über die vollständige Bohrung gleichzeitig zu den ersten und zweiten Sicherheitsventilen (101, 102) und dem Systemanschluss (104) bereitzustellen,

2. Vorrichtung (100) nach Anspruch 1, wobei sich die Öffnung (302) von einem ersten Punkt in einer ersten Richtung um die Achse (1b) und teilweise um die Oberfläche des Ventilelements (207) zu einem zweiten Punkt erstreckt, wobei eine Schließregion (311) gebildet wird, die sich von dem ersten Punkt in einer zweiten Richtung, entgegengesetzt der ersten Richtung, um die Achse (1b) und teilweise um die Oberfläche des Ventilelements (207) zu dem zweiten Punkt erstreckt.

3. Vorrichtung (100) nach Anspruch 2, wobei die Öffnung (302) durch drei kreisförmige Bereiche (801, 802, 803) an der Oberfläche des Ventilelements (207) definiert sind, wobei die drei kreisförmigen Bereiche (801, 802, 803) durch Bohrungen verbunden sind, die sich innerhalb des Ventilelements treffen und von im Wesentlichen gleichem Durchmesser sind, und wobei die Öffnung (302) auch durch einen Durchgang (804) mit einer Breite, die kleiner ist als der Durchmesser der kreisförmigen Bereiche (801, 802, 803), der sich um die Oberfläche des Ventilelements (207) erstreckt, der die drei kreisförmigen Bereiche (801, 802, 803) verbindet, definiert ist.

4. Vorrichtung (100) nach Anspruch 2 und 3, wobei das Ventilelement (207) von einem Körper (200) umgeben ist, der zwei Auslassausgänge (205, 206) definiert, die jeweils angeordnet sind, mit einem jeweiligen der Sicherheitsventile (101, 102) verbunden zu sein.

5. Vorrichtung (100) nach Anspruch 4, wobei die Kanalöffnung (302) angeordnet werden kann, um den Systemanschluss (104) mit beiden Auslassanschlüssen (205, 206) gleichzeitig zu verbinden.

6. Vorrichtung (100) nach Ansprüchen 2 bis 5, wobei die Schließregion (311) angeordnet ist, jeden der Auslassanschlüsse (205, 206) zu verschließen, wenn sie so rotiert wird, dass sie damit ausgerichtet ist.

7. Vorrichtung (100) nach einem der Ansprüche 1 bis 6, wobei sich der Kanal (301) durch die Rotationsachse (1b) des Ventilelements (207) in einer Richtung im Wesentlichen senkrecht zu der Achse (1b) erstreckt.

8. Vorrichtung (100) nach einem der Ansprüche 1 bis 7, wobei das Ventilelement (207) zwei Nocken (309, 310), einer an jeder Seite des Kanals (301), umfasst.

9. Vorrichtung (100) nach einem der Ansprüche 1 bis 8, wobei das Ventilelement (207) eine Kugel mit einer teilweise kugelförmigen Oberfläche umfasst.

10. Vorrichtung (100) nach einem der Ansprüche 1 bis 9, wobei das Ventilelement (207) mit einer Spindel (305) verbunden ist, die angeordnet ist, das Ventilelement (207) zu rotieren, wobei die Spindel (305) eine Passfeder ausbildet, die in das Ventilelement (207) eingreift, und wobei die Passfeder der Spindel (305) nur ermöglicht, mit dem Ventilelement (207) in einer Ausrichtung verbunden zu sein.

11. Vorrichtung (100) nach Anspruch 10, wobei das Ventilelement (207) eine Kugel mit einer Keilnut ist, die in der Oberfläche der Kugel ausgebildet ist, und wobei die Passfeder an der Spindel (305) in einer Position versetzt von der Mittelachse der Spindel (305) ausgebildet ist.

12. Vorrichtung (100) nach einem der vorhergehenden Ansprüche, wobei das Verbindungsmittel einen Griff (300) umfasst, der eine manuelle Isolierung von entweder dem ersten oder dem zweiten Sicherheitsventil (101, 102) ermöglicht.

## Revendications

1. Appareil de sécurité (100) pour un système pressurisé, l'appareil (100) comprenant : une première et une deuxième soupape de sécurité (101, 102) ; un orifice de système (104) pour le raccordement au système pressurisé ; et un moyen de raccordement comprenant une soupape à trois voies (103), la soupape à trois voies (103) comprenant un organe de soupape (207) qui est disposé de manière à tourner autour d'un axe (1b) défini entre deux extrémités (303, 304) de l'organe de soupape (207), et un canal (301) étant formé dans une portion de l'organe de soupape (207) dans la région entre les deux extrémités (303, 304) de l'organe de soupape (207), le canal (301) formant une ouverture (302) à la surface de l'organe de soupape (207), la première et la deuxième soupape de sécurité (101, 102) étant raccordées à l'orifice de système (104) par le biais du moyen de raccordement, qui peut être disposé de manière à isoler individuellement l'une ou l'autre parmi la première et la deuxième soupape de sécurité (101, 102) vis-à-vis de l'orifice de système (104) sans isoler l'autre soupape de sécurité (101, 102) vis-à-vis de l'orifice de système (104) pour ainsi empêcher que les deux soupapes de sécurité (101, 102) ne soient isolées vis-à-vis de l'orifice de système (104) en même temps, **caractérisé en ce que** l'ouverture (302) s'étend autour d'au moins une moitié de la circonférence de l'organe de soupape (207) et **en ce que** le moyen de raccordement peut être disposé de manière à fournir un raccordement d'alésages complet simultanément avec la première et la deuxième soupape de sécurité (101, 102) et l'orifice de système (104).

2. Appareil (100) selon la revendication 1, dans lequel l'ouverture (302) s'étend depuis un premier point dans une première direction autour de l'axe (1b) et sur une partie de la distance autour de la surface de l'organe de soupape (207) jusqu'à un deuxième point, en laissant une région de fermeture (311) s'étendant depuis le premier point dans une deuxième direction, opposée à la première direction, autour de l'axe (1b) et sur une partie de la distance autour de la surface de l'organe de soupape (207) jusqu'au deuxième point.

3. Appareil (100) selon la revendication 2, dans lequel l'ouverture (302) est définie par trois zones circulaires (801, 802, 803) sur la surface de l'organe de soupape (207), les trois zones circulaires (801, 802, 803) étant raccordées par des alésages se rejoignant à l'intérieur de l'organe de soupape et étant de diamètres sensiblement égaux, et l'ouverture (302) étant également définie par un passage (804) ayant une largeur qui est inférieure au diamètre des zones circulaires (801, 802, 803), lequel s'étend autour la surface de l'organe de soupape (207) joignant les trois zones circulaires (801, 802, 803).

4. Appareil (100) selon les revendications 2 et 3, dans lequel l'organe de soupape (207) est entouré par un corps (200) qui définit deux orifices de sortie (205, 206), chacun étant prévu pour être raccordé à une soupape respective des soupapes de sécurité (101, 102).

5. Appareil (100) selon la revendication 4, dans lequel l'ouverture de canal (302) peut être disposée de manière à joindre l'orifice de système (104) aux deux orifices de sortie (205, 206) simultanément.

6. Appareil (100) selon les revendications 2 à 5, dans lequel la région de fermeture (311) est disposée de manière à fermer chacun des orifices de sortie (205, 206) lorsqu'elle est tournée de manière à être alignée avec eux.

7. Appareil (100) selon l'une quelconque des revendications 1 à 6, dans lequel le canal (301) s'étend à travers l'axe de rotation (1b) de l'organe de soupape (207) dans une direction sensiblement perpendiculaire à l'axe (1b).

8. Appareil (100) selon l'une quelconque des revendications 1 à 7, dans lequel l'organe de soupape (207) comprend deux lobes (309, 310), un de chaque côté du canal (301).

9. Appareil (100) selon l'une quelconque des revendications 1 à 8, dans lequel l'organe de soupape (207) comprend une bille ayant une surface partiellement sphérique.

10. Appareil (100) selon l'une quelconque des revendications 1 à 9, dans lequel l'organe de soupape (207) est raccordé à une broche (305) qui est disposée de manière à faire tourner l'organe de soupape (207), la broche (305) définissant une clé qui vient en prise avec l'organe de soupape (207), et la clé permettant seulement à la broche (305) d'être raccordée à l'organe de soupape (207) dans une orientation.

11. Appareil (100) selon la revendication 10, dans lequel l'organe de soupape (207) est une bille avec une rainure de clavette formée dans la surface de la bille, et la clé est formée sur la broche (305) dans une position décalée par rapport à l'axe central de la broche (305).

12. Appareil (100) selon l'une quelconque des revendications précédentes, dans lequel le moyen de raccordement comprend une poignée (300) qui permet une isolation manuelle de la première ou de la deuxième soupape de sécurité (101, 102).
